# EUROPÄISCHE PATENTSCHRIFT

(11) **EP 1 419 349 B1**
(45) Veröffentlichungstag und Bekanntmachung des Hinweises auf die Patenterteilung: **11.05.2005**
(21) Anmeldenummer: 02767197.3
(22) Anmeldetag: 10.07.2002
(51) Int. Cl.: F24F 3/16, B01D 47/02

(54) **LUFTREINIGUNGSGERÄT**
AIR PURIFICATION DEVICE
APPAREIL PURIFICATEUR D'AIR

(43) Veröffentlichungstag der Anmeldung: 19.05.2004
(73) Patentinhaber: Enzenhofer, Matthias, 75397 Simmozheim (DE)
(72) Erfinder: Enzenhofer, Matthias, 75397 Simmozheim (DE)
(74) Vertreter: Dreiss, Fuhlendorf, Steimle & Becker
(86) Internationale Anmeldenummer: PCT/EP2002/007698
(87) Internationale Veröffentlichungsnummer: WO 2004/008034

(56) Entgegenhaltungen:
- EP-A- 0 118 811
- DE-U- 29 804 054
- US-A- 4 793 835
- US-A- 4 851 016
- US-A- 5 017 201
- PATENT ABSTRACTS OF JAPAN vol. 2000, no. 15, 6. April 2001 (2001-04-06) & JP 2000 334240 A (SANWA SEIKI KOGYO KK), 5. Dezember 2000 (2000-12-05)

## Beschreibung

Die Erfindung betrifft ein Luftreinigungsgerät nach dem Oberbegriff des Patentanspruchs 1, wie z.B. aus der DE-2 980 454-U bekannt.

Luftreinigungsgeräte gibt es bereits in vielfältigen Ausführungen. Z. B. wird die von Staub und sonstigen Schadstoffpartikeln zu reinigende Luft mittels Ventilatoren durch Trockenfilter, z. B. aus Glasfaser, geblasen, die von Zeit zu Zeit erneuert werden müssen. Ggf. wird zuvor die Luft mit Vorfiltern von gröberen Schmutzpartikeln und Schwebstoffen vorgereinigt. Zusätzlich werden z. B. auch Aktivkohlefilter vorgesehen, mit denen gasförmige Schadstoffe, wie z. B. die durch Zigarettenrauch oder Küchendünste verursachten Gerüche, entfernt werden sollen, was damit jedoch nur unzureichend gelingt.

Eine gewisse Luftreinigung kann z. B. auch mit Luftbefeuchtungsgeräten erzielt werden. Hier wird, wie z. B. aus der Druckschrift DE 33 08 871 A1 bekannt, die zu befeuchtende Luft durch zwei in einem Gehäuse waagerecht nebeneinander angeordnete, annähernd zur Hälfe in Wasser eintauchende, aus jeweils einer größeren Anzahl von hintereinander angeordneten Scheiben gebildete Walzen geführt. Dabei werden auch Staubpartikel aus der Luft ausgewaschen, weshalb solche Geräte auch als "Luftwäscher" bezeichnet werden. Dagegen können auf diese Weise z. B. in der Luft enthaltene Gerüche nicht wirklich beseitigt werden.

Es sind auch noch so genannte Raum- oder Heilklimageräte bekannt, wie z. B. aus der EP O 183 518 B1. Bei diesem wird die zum Erzeugen eines so genannten Meeresbrandungsklimas zu behandelnde Luft, um sie von Staub und dgl. zu reinigen, von einem Gebläse durch einen Trocken-Vorfilter in ein Gehäuse gesogen und weiter zu einer Ausblasöffnung gefördert. Dabei passiert sie nach einer Ionisationseinrichtung einen aus Verwirbelung von in einem Behälter im Gerät vorrätig gehaltenen Meerestiefwasser erzeugten Tropfenvorhang, wodurch sie sich mit mineralischen Meerwasser-Wirkstoffen anreichert.

Aufgabe der Erfindung ist es, ein sowohl stationär als auch mobil einsetzbares Luftreinigungsgerät zu schaffen, mit dem schadstoffbelastete, insbesondere mit gesundheitsschädigenden Partikeln, aber auch mit Gerüchen belastete Luft gereinigt und so die Luftqualität in Räumen auch in medizinischer Hinsicht verbessert werden kann.

Die Erfindung löst diese Aufgabe mit den im Patentanspruch 1 angegebenen Merkmalen. Vorteilhafte Weiterbildungen sind Gegenstand der Unteransprüche.

Die Erfindung basiert auf der Idee, Gerüche aus geruchsbelasteter Luft eines Raums dadurch zu entfernen, dass diese Luft kontinuierlich durch ein Gehäuse mit einem Behälter mit einer aus einer Vielzahl von Filterelementen bestehenden Nass-Filtervorrichtung gefördert wird. In dieser kommt es zwischen der zu reinigenden Luft und einer wässrigen Lösung eines handelsüblichen Geruchsbindemittels zu einem intensiven Kontakt auf der Oberfläche der Filterelemente. Dabei können sich die Geruchsmoleküle in einem Absorptionsvorgang chemischer Art an die sich durch eine Geruchsbinde-Eigenschaft auszeichnenden Moleküle der Geruchsbindemittel-Lösung anlagern und so aus der schadstoffbelasteten Luft eliminiert werden, wodurch diese geruchsfrei wird. Da die Geruchsbindemittel-Lösung hierdurch nach und nach ihre Wirksamkeit verliert, muss sie nach einer bestimmten Einsatzdauer erneuert werden.

Es hat sich nun aber überraschenderweise gezeigt, dass durch den intensiven Kontakt zwischen der zu reinigenden Luft und den von der Geruchsbindemittel-Lösung umspülten Filterelementen nicht nur Geruchsmoleküle gebunden werden, sondern insbesondere auch gesundheitsschädigende Schadstoffpartikel in Größenordnungen bis zu nur 0,5µ aus der zu reinigenden Luft von der Geruchsbindemittel-Lösung absorbiert und somit aus der Luft sozusagen ausgewaschen werden. Hierfür scheinen die Filterelemente offensichtlich eine Art Katalysatorfunktion auszuüben.

Für diese Luftreinigung durch Partikel- und Geruchsmolekül-Elimination ist in dem Gehäuse des Luftreinigungsgeräts ein im Filterungsvorraum geschlossener ausgebildeter Behälter mit einer den Weg der durch diesen Behälter geförderten verunreinigten Luft kreuzend angeordneten Nass-Filtervorrichtung vorgesehen mit einer Vielzahl von Filterelementen aus einem für die Geruchsbindemittel-Lösung durchlässigen Material in einer zumindest annähernd hohlzylindrischen Ausgestaltung mit in Bezug zur Länge der Filterelemente geringer lichter Weite, die in zumindest annähernd vertikaler Ausrichtung, in Abständen nebeneinander aufgereiht, in mehreren parallelen, lückenüberdeckend hintereinander angeordneten Reihen vorhangartig die Querschnittsfläche des Luftwegs überdecken.

Mit diesen Filterelementen wird folgendes erreicht:
- eine große Kontaktfläche auf kleinem Raum für einen intensiven Kontakt der von Schadstoffen und Gerüchen zu reinigen Luft mit der Geruchsbindemittel-Lösung aufgrund der zumindest annähernd hohlzylindrischen und damit oberflächenoptimierend wirkenden Form der einzelnen, wegen geringer lichter Weite selbst wenig Platz beanspruchenden Filterelemente;
- staudruckverringernde Wirkung sowohl der einzelnen Filterelemente aufgrund ihrer den Strömungswiderstand minimierenden Querschnittsform wie auch der Gesamtheit aller Filterelemente aufgrund ihrer zwar engen, aber einzeln voneinander beabstandeten Anordnung nebeneinander in mehreren, jeweils auf Lücke versetzt hintereinander angeordneten Reihen, im Gegensatz etwa zum Widerstand einer großflächigen Filterbarriere;
   dadurch eine dementsprechend geringere, auch zu einer geringeren Geräuschentwicklung führende Leistung des die zu reinigende Luft durch das Gerätegehäuse fördernden Vorrichtung, was wiederum zu einer geringeren Anströmgeschwindigkeit der Filterelemente führt, wodurch von der auf die Filterelemente aufgeblasen Luft von deren Oberfläche weniger Geruchsbindemittel-Lösungsmengen mitgenommen und somit die Befeuchtung geruchs- und partikelgereinigter Luft mit Geruchsbindemittel-Lösung gering bleibt;
   darüber hinaus führt die zumindest annähernd hohlzylindrische Ausgestaltung der Filterelemente in Verbindung mit einem geringeren Staudruck auch dazu, dass die die Filterelemente anströmende Luft nur außen an ihnen vorbei geblasen, nicht aber durch sie hindurch geblasen wird, wodurch sie sonst beim Wiederaustritt aus den Filterelementen verstärkt Geruchsbindemittel-Lösung aufnehmen könnte; auch dies führt dazu, dass beim Luftreinigen mit diesen Filterelementen mengenmäßig kaum Geruchsbindemittel-Lösung aus ihrer chargenmäßigen Einsatzmenge verbraucht wird;
- eine Kapillareigenschaft der Filterelemente aufgrund der Durchlässigkeit bzw. Porosität des für die Filterelemente vorgesehenen Materials für die Geruchsbindemittel-Lösung; dies führt zu einem Verlangsamen der an den Filterelementen allein unter Schwerkrafteinfluß herablaufenden Geruchsbindemittel-Lösung, da sie hierbei ständig in die Poren in der Wandung der Filterelemente gesogen und von der nachfolgenden Lösung auf die Außenseite der Filterelemente gedrückt wird, so dass es sich statt um ein Herunterlaufen eigentlich nur noch um ein langsameres Herunterrinnen handelt; gelangt die Geruchsbindemittel-Lösung, nachdem sie auf ein entsprechendes Niveau gefördert wurde, zunächst ins Innere der Filterelemente, so tritt sie also beim Herabrinnen durch deren Wandung nach außen und führt so zu einem stetigen Benetzen der Außenseite der Filterelemente bis hin zur Ausbildung eines auch außen an ihnen herunterrinnenden Lösungsflüssigkeits-Films; das ist für den intensiven Kontakt zwischen der Geruchsbindemittel-Lösung und der aufgeblasenen zu reinigenden Luft besonders wichtig;
   es führt auch dazu, dass die durch diesen Kontakt von den Filterelementen aus der von Schadstoffen sowie ggf. Gerüchen zu reinigenden Luft auf ihrer Außenseite von dem Lösungsfilm festgehaltenen bzw. aufgenommenen Schadstoffpartikel durch unablässig von innen nach außen drückende Geruchsbindemittel-Lösung von der Oberfläche der Filterelemente ab- und im weiteren Verlauf in den Reinigungsbehälter gespült werden, so dass diesbezüglich die Filterelemente sich selbst reinigen - eine ganz bedeutende Eigenschaft dieses neuartigen Luftreinigungsgeräts, denn dadurch werden die Filterelemente weder verbraucht noch müssen sie etwa in bestimmten Abständen erneuert werden;
   durch das - langsame - Herunterrinnen der Geruchsbindemittel-Lösung wird der Kontakt mit der auf sie auftreffenden Luft und damit auch ihre reinigenden Wirkung für die Luft verlängert, was sich vorteilhaft auf die für einen Reinigungszyklus bestimmter Dauer bereitzuhaltende Vorratsmenge an Geruchsbindemittel-Lösung auswirkt, wozu auch beiträgt, dass diese Lösung, wie erläutert, kaum mengenmäßig. verbraucht wird.

Dadurch, dass außen auf der der Luftansaugöffnung des Gerätegehäuses zugewandten Stirnwand des Reinigungsbehälters, über einer darin dafür ausgebildeten Lufteintrittsöffnung, die Vorrichtung zum Erzeugen eines Luftstroms, vorzugsweise ein Radialventilator, angeordnet ist, und dadurch, dass der Reinigungsbehälter, in den der Ventilator die in das Luftreinigungsgerät gesogene Luft fördert, im Bereich vor der Nass-Filtervorrichtung gegenüber dem Gerätegehäuse allseits geschlossen ist, wird erreicht, dass im Reinigungsbehälter für das Filtern der Luft besonders günstige, weitgehend konstante Druckverhältnisse aufgrund des kontinuierlich erzeugten Luftstroms herrschen. Dementsprechend kann die Dimensionierung der Nass-Filtervorrichtung mit einer großen Anzahl von z. B in mehreren parallelen Reihen jeweils eng auf Lücke versetzt angeordneten Filterelementen erfolgen, was den Wirkungsgrad des Luftreinigungsgeräts positiv beeinflusst.

Dazu trägt auch ein die Nass-Filtervorrichtung vertikal in zwei Teile gliederndes Luftverwirbelungselement bei, mit dem durch eine Verwirbelung der zu reinigenden aufgeblasenen Luft stattfindet und ein gleichmäßigeres Beaufschlagen der Nass-Filtervorrichtung auf ihrer gesamten Breite erreicht wird, wodurch der Kontakt der zu reinigenden Luft mit den Filterelemente verstärkt und intensiviert wird.

Dadurch, dass in dem Gerätegehäuse eine Vorrichtung vorgesehen ist, die Geruchsbindemittel-Lösung während deren Wirksamkeitsdauer kontinuierlich aus dem sie enthaltenden Lösungsbehälter auf ein Niveau fördert, von dem sie die Filterelemente wieder herabläuft, wird eine diesbezüglich einfach zu realisierende Betriebsweise des Luftreinigungsgeräts erreicht. So kann diese Vorrichtung nach dem Einschalten z. B. zeitgesteuert dann wieder abgeschaltet werden, wenn ihre Laufzeitdauer der Dauer der Nutzbarkeit der Geruchsbindemittel-Lösung entspricht, wenn also deren Wirkung bzw. Eigenschaft, Gerüche und Partikel zu binden, erschöpft ist.

Weil die Geruchsbindemittel-Lösung im Kreislauf auf ein Niveau hoch gefördert wird und dann die Filterelemente herabläuft, kommt sie nie ganz zum Stillstand. Dadurch bleiben die von ihr aus der zu reinigenden Luft aufgenommenen Schadstoffpartikel zumindest bei normalem Luftverschmutzungsgrad in ihr in Schwebe und setzen sich nicht etwa als Schlamm im Reinigungsbehälter ab. Dadurch sind sie, in einem diesbezüglichen Reinigungszyklus, zusammen mit dem wirkungslos gewordenen Vorrat an Geruchsbindemittel-Lösung ohne weiteres aus dem Lösungs-Kreislauf entfernbar. Es muss folglich danach der Reinigungsbehälter z. B. nicht erst gespült werden, um ihn etwa zu reinigen, bevor er mit neuer GeruchsbindemittelLösung befüllt wird. Das kann aber vorsorglich auch, z. B. in einem separat, z. B. manuell ausgelösten Spülvorgang erfolgen.

Mit Vorteil handelt es sich bei den Filterelementen um schlauchförmige poröse Kunststoff-Hohlprofile, vorzugsweise in Form von gleich langen Abschnitten eines aus thermoplastischen Kunststofffäden gestrickten biegeschlaffen, durch Erhitzen stabilisierten Strickschlauchs. Solche Kunststoff-Strickschläuche begünstigen aufgrund ihres nur einen geringen Anströmwiderstand bietenden kreisrunden Querschnitts in Verbindung mit ihrer werkstoffgemäß glatten Oberflächenbeschaffenheit einerseits ihr Umströmen mit der zu reinigenden Luft, was sich, wie schon erwähnt, vorteilhaft auf die Leistung der die zu reinigende Luft durch das Gerätegehäuse und die Nass-Filtervorrichtung fördernde Vorrichtung, vorzugsweise ein Radialventilator, und die damit verbundene Geräuschentwicklung auswirkt. Andererseits verrotten diese Kunststoff-Strickschläuche nicht, was trotz ihrer im Betrieb des Luftreinigungsgeräts ständigen Durchfeuchtung mit Geruchsbindemittel-Lösung eine wartungsfreie, lange Einsatzdauer ermöglicht.

Hierzu trägt auch bei, dass die zur Luftreinigung vorgesehene Geruchsbindemittel-Lösung auch eine zumindest verkalkungshemmende Wirkung haben kann. Dadurch kann zu ihrer Zubereitung, üblicherweise aus einem Geruchsbindemittel-Konzentrat und Wasser, dieses Wasser am jeweiligen Einsatzort des Luftreinigungsgeräts, also unabhängig von der örtlichen Wasserhärte, aus dem öffentlichen Trinkwasserleitungsnetz entnommen werden, d. h. ohne Gefahr, dass sich z. B. die Poren der porösen Strickschläuche durch Kalkablagerungen zusetzen.

Es ist aber auch denkbar, als Filterelemente statt Hohlprofile mit kreisrund-geschlossenem Querschnitt solche mit z. B. nur halbkreisförmigen, also mit halbseitig offenem Querschnitt zu verwenden, wie sie sich z. B. aus in Längsrichtung in zwei Hälften aufgeschnittenen Strickschläuchen ergeben würden. Solche Filterelemente wären dann so in der Filtervorrichtung anzuordnen, dass die zu reinigende Luft aus den zuvor erwähnten Gründen bzgl. der Luft-Befeuchtung auf ihre konvexe Seite aufgeblasen werden würde.

Bei der Vorrichtung zum Erzeugen eines Luftstroms handelt es sich vorzugsweise um einen Radialventilator. Diese Bauweise ermöglicht nicht nur einen kraftvollen Luftstrom in den Reinigungsbehälter und damit auch durch die kompakt ausgebildete Nass-Filtervorrichtung, sondern gleichzeitig auch, im Gegensatz z. B. zu Axialventilatoren, ein geringeres Betriebsgeräusch des Luftreinigungsgeräts. Eine weitere Geräuschminderung ist möglich, wenn die Drehzahl des Radialventilators bei geringer belasteter Luft reduziert wird.

Die vorgesehene Entleerungspumpe ist vorzugsweise kontaktlos ausgebildet, so dass im Falle eines Blockierens durch Überlastung beim Abpumpen von stark verschlammter verbrauchter Geruchsbindemittel-Lösung keine Gefahr von ihr ausgehen kann, da es keine elektrische Verbindung zu ihren Wicklungen gibt und so deren Überhitzung und ein daraus resultierender Schaden sicher vermieden werden kann.

Durch weitere im bzw. am Gerätegehäuse vorsehbare Bauteile kann der Betrieb des Luftreinigungsgeräts für eine längere Dauer weitgehend automatisiert werden.

Anhand von schematischen Zeichnungen wird nachfolgend ein bevorzugtes Ausführungsbeispiel der Erfindung näher erläutert, wobei sich weitere Einzelheiten und Vorteile der Erfindung ergeben.

Es zeigen:
- Fig. 1: die Vorderansicht des Luftreinigungsgeräts;
- Fig. 2: das Luftreinigungsgerät nach Fig. 1 in einer lediglich bis zur Längsmitte des Gerätegehäuses dargestellten Seitenansicht von rechts bei abgenommener Seitenverkleidung und vertikal aufgeschnittenem Reinigungsbehälter und Vorratsbehälter;
- Fig. 3: das Luftreinigungsgerät nach Fig. 1 in der teilweise aufgebrochenen Seitenansicht von links mit aufgeschnittenem Reinigungsbehälter in ebenfalls nur bis zur Längsmitte des Gerätegehäuses dargestellter Ansicht;
- Fig. 4: die Rückansicht des Luftreinigungsgeräts nach Fig. 1 bei abgenommener Rückwand und von Vorratsbehälter und Reinigungsbehälter entfernter Rückseite.

Das in den Figuren dargestellte Luftreinigungsgerät hat ein quaderförmiges Gehäuse mit einem aus genuteten, z. B. aus Aluminium oder rostfreiem Edelstahl bestehenden Profilabschnitten 1 zusammengesetzten und miteinander verschraubten Rahmen mit in die Nuten eingesetzten, z. B. ebenfalls aus Aluminium, rostfreiem Edelstahl oder auch Kunststoff bestehenden Gehäusewänden, wobei die Verschraubungen in den Ecken durch Kunststoffkappen 2 verdeckt sind.

Für den mobilen Einsatz des Geräts sind am Boden des Gehäuses vier Rollen 3, davon mindestens zwei Lenkrollen, angebracht. Für eine optische Kontrolle des Gehäuseinneren kann z. B. in einer der Seitenwände ein Sichtfenster vorgesehen sein.

Das gezeigte Gerätegehäuse hat einen quadratischen Grundriss mit einer Kantenlänge von ca. 50 cm und eine Höhe von ca. 100 cm, womit dieses Luftreinigungsgerät für mobile Einsatzzwecke noch gut handhabbar und transportabel.ist.

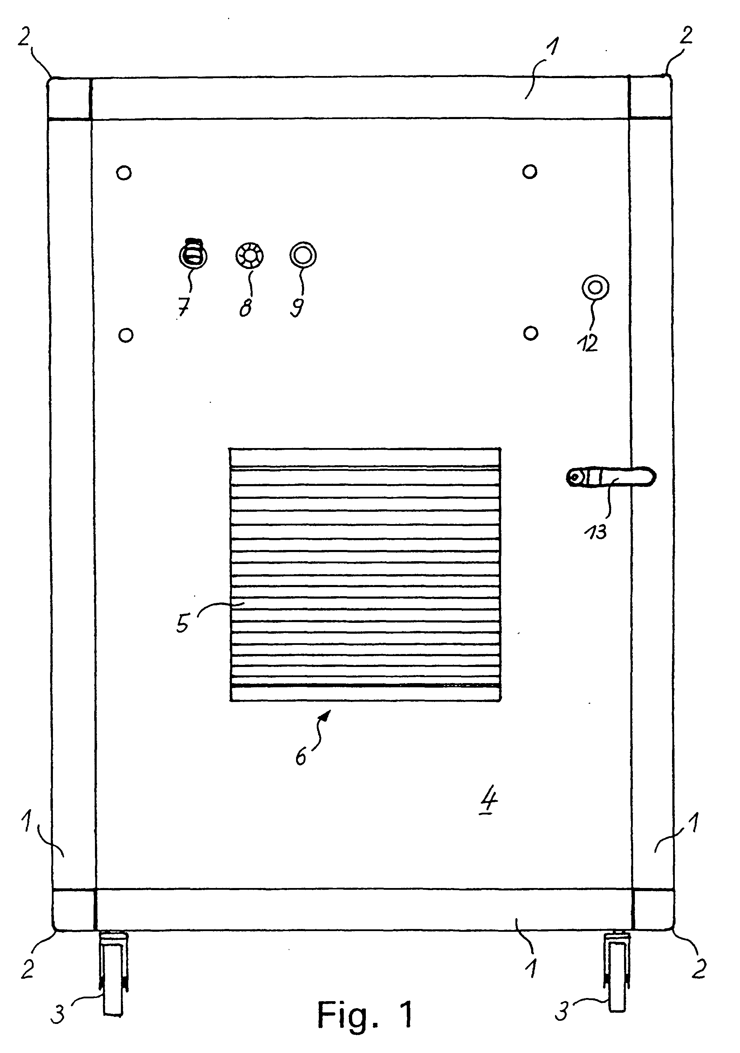

In der Gehäusestirnwand 4 (Fig. 1) befindet sich eine mit einem aufgesetzten Lamellengitter 5 abgedeckte quadratische Luftansaugöffnung 6 für die aus einem Raum zur Reinigung in das Gerätegehäuse anzusaugende Luft.

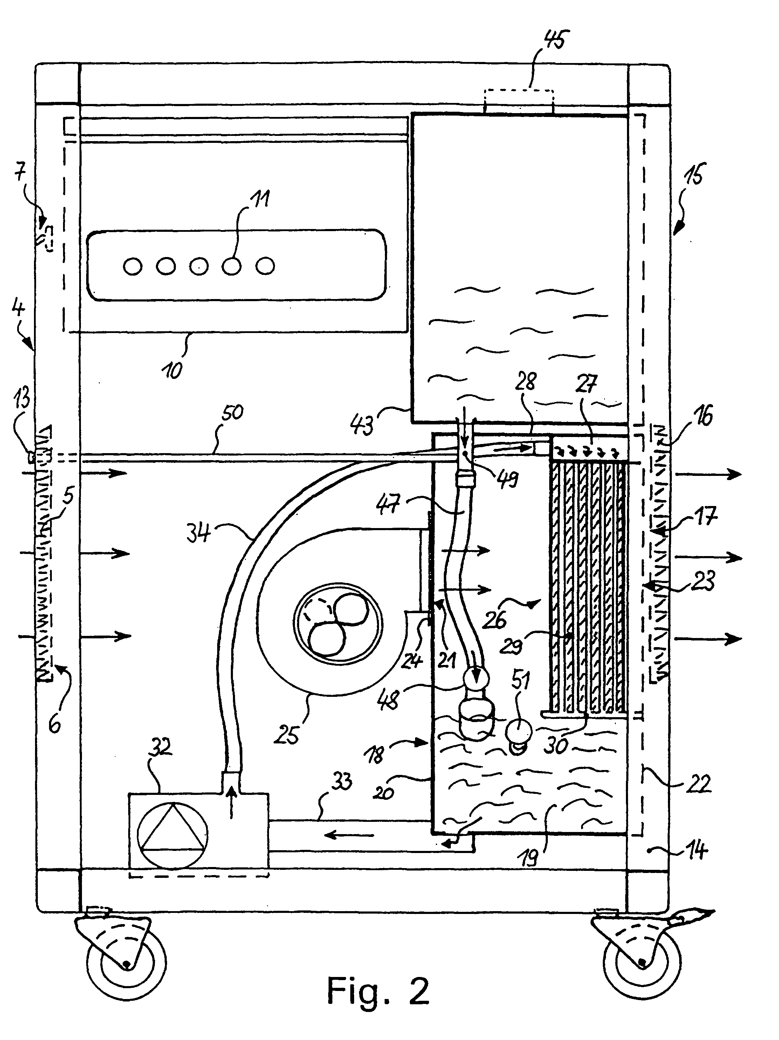

Oberhalb des Lamellengitters 5 ist der Geräte-Ein-/Aus-Schalter 7, eine Betriebsanzeige-Leuchte 8 und ein Schalter 9 zum Auslösen eines willkürlichen Gerätestarts, um z. B. einen Pumpvorgang auszulösen, angeordnet. Dahinter, hinter der Gehäusestirnwand 4, befindet sich ein Schaltkasten 10 mit den zum Betrieb und der zyklischen Betriebs-Steuerung des Luftreinigungsgeräts notwendigen elektrischen Bauteilen sowie einer Anzahl Kabelauslässe 11 (Fig. 2).

Auf der rechten Seite ist in die Gehäusestirnwand 4 eine Durchführung 12 für das Geräteanschlusskabel eingesetzt.

Rechts neben dem Lamellengitter 5 befindet sich ein Hebel 13 zur Betätigung eines weiter unten erläuterten Absperrorgans.

Wie in Fig.2 rechts angedeutet, befindet sich in der vom benachbarten Rahmenprofilabschnitt 14 verdeckten Gerätegehäuse-Rückwand 15 eine der Luftansaugöffnung 6 in der Gerätegehäuse-Stirnwand 4 entsprechende quadratische, ebenfalls von einem Lamellengitter 16 abgedeckte Luftausblasöffnung 17 zum Ausblasen der von Gerüchen und Schadstoffen gereinigten Luft aus dem Gerätegehäuse.

In einem geringen Abstand davor, im unteren Bereich des Gerätegehäuses, befindet sich - in Fig. 2 ebenfalls zum Teil vom schon erwähnten Rahmenprofilabschnitt 14 verdeckt - vor der Gerätegehäuse-Rückwand 15 in symmetrischer Anordnung zur vertikalen Mitte der Luftausblasöffnung 17 ein so genannter Reinigungsbehälter 18 mit - im unteren Behälterdrittel - einem Fassungsvermögen von 6 Litern Geruchsbindemittel-Lösung 19. Zum Vermeiden einer statischen, Schmutzpartikel aus der zu reinigenden Luft anziehenden Aufladung, ist der Reinigungsbehälter 18 aus einem - lebensmittelechten - Polycarbonat-Kunststoff hergestellt, wie er z. B. und dem geschützten Namen "Makrolon®" im Handel ist.

Die Stirnseite 20 des Reinigungsbehälters 18 weist eine rechteckige Lufteintrittsöffnung 21 und seine Rückseite 22 eine, wie die Luftansaugöffnung 6 in der Gerätegehäuse-Stirnwand 4 und die Luftausblasöffnung 17 in der Gerätegehäuse-Rückwand 15, quadratische Luftaustrittsöffnung 23 auf, wobei die Lufteintrittsöffnung 21 der Luftausblasöffnung 17 des Gerätegehäuses gegenüberliegt.

Auf der Stirnseite 20 des Reinigungsbehälters 18 ist an einem die Lufteintrittsöffnung 21 einfassenden Rahmen 24 ein Radialventilator 25 angeordnet, der Luft aus der Umgebung des Luftreinigungsgeräts in das Gerätegehäuse saugt und weiter in den Reinigungsbehälter 18 bläst. Um das unvermeidbar von ihm ausgehende Laufgeräusch zu verringern, kann seine Drehzahl verändert werden, um so das Betriebsgeräusch des Luftreinigungsgeräts z. B. an unterschiedliche Luftverschmutzungsgrade dahingehend anpassen zu können, dass bei geringerer Verschmutzung der Radialventilator 25 aufgrund dann möglicher geringer Drehzahlen leiser läuft.

Mit dieser Bauweise und Anordnung des Radialventilators 25 bildet der Reinigungsbehälter 18 im Hinblick auf die Reinigung von geruchs- und schadstoffbelasteter Luft mittels einer im Reinigungsbehälter angeordneten Nass-Filtervorrichtung 26, abgesehen von der Luftaustrittsöffnung 23 hinter der Nass-Filtervorrichtung 26, ein so genanntes geschlossenes System. Ein solches hat den Vorteil der einfacheren Betriebs- und Wirkungsoptimierung - im Gegensatz zur sonst üblichen Anordnung z. B. eines Axialventilators in der Gerätegehäuse-Stirnwand oder einer Gerätegehäuse-Seitenwand.

Die sich vor der Rückseite 22 des Reinigungsbehälters 18 befindende Nass-Filtervorrichtung 26 hat oben einen so genannten Lösungs-Verteilerbalken 27 in Form eines flachen Hohlprofils mit rechteckigem Querschnitt aus z. B. Aluminium, das sich oben direkt unter der Oberseite 28 des Reinigungsbehälters 18 waagerecht mit einer Tiefe von ca. 7,5 cm annähernd über dessen gesamte Breite von ca. 26 cm erstreckt. Der Boden dieses Lösungs-Verteilerbalkens 27 ist z. B. mit sieben parallelen, sich auf annähernd über die gesamte Breite des Lösungsbehälters 18 erstreckenden Reihen von Löchern mit einem Durchmesser von jeweils 5 mm versehen. Ihr Lochmittenabstand beträgt sowohl in den einzelnen Reihen als auch von Reihe zu Reihe z. B. jeweils 10mm oder auch 8 mm, wobei die einzelnen Reihen jeweils eng auf Lücke versetzt hintereinander angeordnet sind.

In Abhängigkeit der gewählten Abstände der Löcher voneinander ergibt sich eine unterschiedliche Filterdichte.

In die hier z. B. vorgesehenen 165 Löcher ist jeweils das obere Ende der ca. 30 cm langen Filterelemente 29 eingeklebt oder eingeclipst. Bei diesen handelt es sich um Abschnitte von einem aus Kunststofffäden gestrickten biegeschlaffen, durch Erhitzen stabilisierten Strickschlauch mit ca. 5 mm Durchmesser.

Die unteren Enden dieser Filterelemente bzw. Strickschläuche 29 sind in die Löcher einer mit sieben entsprechenden Lochreihen, wie der Boden des Verteilerbalkens, versehenen, an der Rückseite des Reinigungsbehälters 18 oder einer den Lösungs-Verteilerbalken 27 tragenden Halterung befestigten Lochplatte 30 ebenfalls eingeklebt oder eingeclipst, wodurch die Strickschläuche 29 vertikal ausgerichtet und straff gespannt sind. Dadurch kann, abgesehen von den kaum voneinander beabstandeten Strickschläuche 29 in den sieben Reihen hintereinander, verhindert werden, dass sie sich ggf. im Lauf der Zeit, ggf. auch aufgrund der auf sie aufgeblasenen zu reinigenden Luft, etwa in ihrem mittleren Bereich seitwärts verbiegen und sich ggf. so weit voneinander entfernen, dass zwischen zwei benachbarten Strickschläuchen 29 eine Lücke, ein so genannter Bypass, entsteht, der ihre Filterwirkung für die auf sie aufgeblasene Luft beeinträchtigen könnte.

Es ist aber auch denkbar, durch Minimierung der Abstände zwischen den Strickschläuchen, z. B. durch ein aufgrund ihrer Materialbeschaffenheit mögliches längsseitiges Verschweißen, eine extreme Filterdichte zu erzielen.

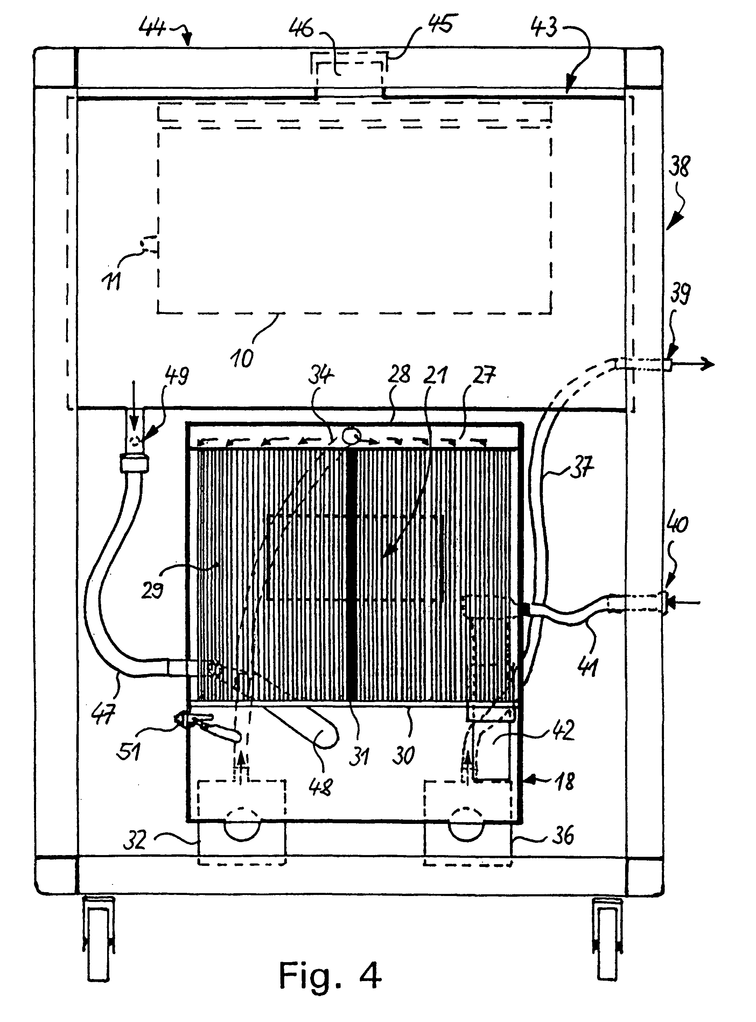

Senkrecht in der Mitte der Nass-Filtervorrichtung 26 ist ein die in den Reinigungsbehälter 18 eingeblasene Luft beidseits auf die Strickschläuche 29 verwirbelndes, wegen der oben schon erwähnten Vorteile auch aus "Makrolon®" hergestelltes Luftverwirbelungselement in Form einer rechteckigen Platte 31 (Fig. 4) mit an die Nass-Filtervorrichtung 26 angepassten Maßen angeordnet.

Als Vorrichtung zum Fördern von Geruchsbindemittel-Lösung 19 aus dem Reinigungsbehälter 18 in den Lösungs-Verteilerbalken 27 ist eine aus den oben erwähnten Sicherheitsgründen ebenfalls kontaktlos ausgebildete Umwälzpumpe 32 auf der linken Seite in einem Abstand hinter der Gerätegehäuse-Stirnwand 4 angeordnet, die über eine annähernd waagerechte Zuflussleitung 33 mit dem Reinigungsbehälter 18 und über eine an ihrem Druckstutzen angeschlossene Lösungs-Steigleitung 34 mit dem Verteilerbalken 27, in dessen Mitte sie einmündet, verbunden ist.

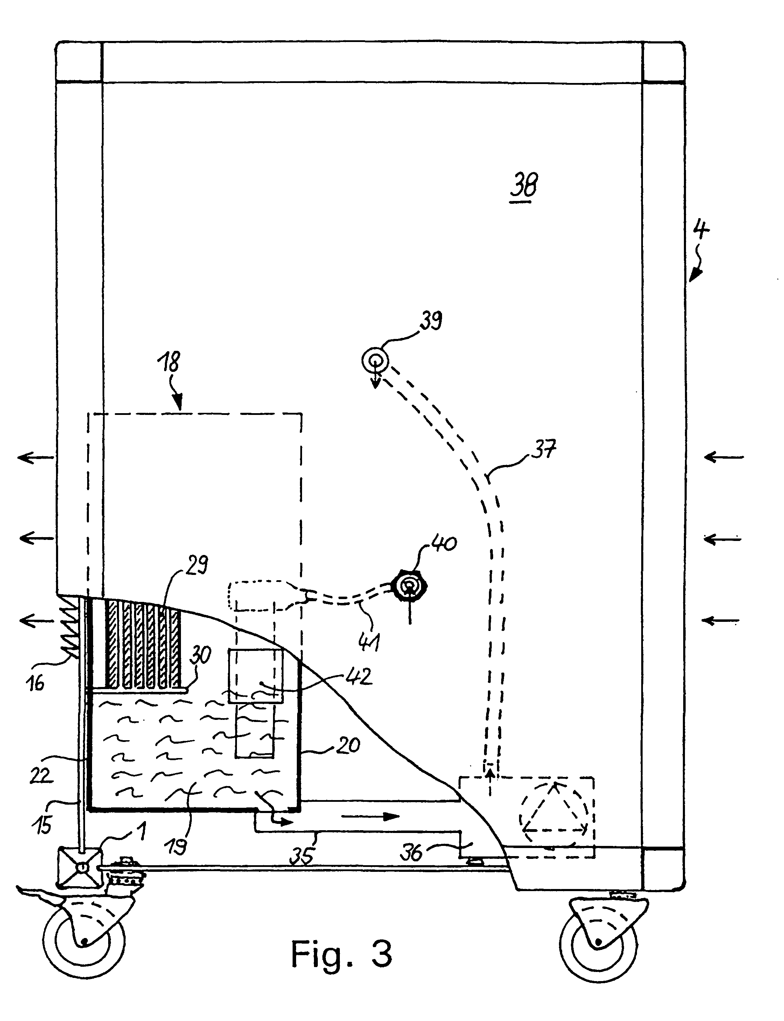

In paralleler Anordnung zur Umwälzpumpe 32 befindet sich hinter der Gerätegehäuse-Stirnseite 4 auf der rechten Seite eine über eine ebenfalls annähernd waagerechte Zuflussleitung 35 mit dem Reinigungsbehälter 18 verbundene Entleerungspumpe 36 (Fig. 3, 4). Ihr Druckstutzen ist mittels einer Entleerung-Steigleitung 37 mit einem in der rechten Gehäuseseitenwand 38 nach außen führend angeordneten, mit einem Rückschlagventil ausgestatteten Schlauch-Anschlusstutzen 39 für einen Entleerungsschlauch verbunden, um benutzte, wirkungsmäßig verbrauchte Geruchsbindemittel-Lösung 19 bequem aus dem Reinigungsbehälter 18 durch Abpumpen entfernen zu können.

Eine von einem in der unteren Hälfte der rechten Gehäuseseitenwand 38 angeordneten zweiten Anschlussstutzen 40 mit Rückflussverhinderer ausgehende, in den Reinigungsbehälter 18 annähernd in der Mitte einmündende Frischwasserzuleitung 41 endet, zwecks Steuerung des Zulaufs in Abhängigkeit vom Frischwasser-Füllstand im Reinigungsbehälter 18, in einem Schwimmerventil 42.

Oberhalb des Reinigungsbehälters 18 befindet sich in einer Halterung unmittelbar vor der Gerätegehäuse-Rückwand 15 ein dessen ganze Breite einnehmender, vorn über den Reinigungsbehälter 18 überstehender Vorratsbehälter 43 (Fig. 2, 4) mit einem Fassungsvermögen von dreißig Litern von einsatzfertig zubereiteter Geruchsbindemittel-Lösung oder aber Geruchsbindemittel-Konzentrat. Beide Flüssigkeiten können durch eine von der Oberseite 44 des Gerätegehäuses (Fig. 4) zugängliche, mit einer Kappe 45 verschließbaren Einfüllöffnung 46 eingefüllt werden. Zum Reinigen kann der Vorratsbehälter 43 aus seiner Halterung herausgenommen werden.

Wegen der oben schon erwähnten Vorteile besteht auch der Vorratsbehälter 43 aus "Makrolon®".

Ein zur Zubereitung von einsatzbereiter Geruchsbindemittel-Lösung, um den Vorratsbehälter 43 damit aufzufüllen, besonders geeignetes Geruchsbindemittel-Konzentrat wird z. B. von der Firma AWS Systeme GmbH, D-73397 Simmozheim, unter der Bezeichnung "ODOCID" hergestellt und vertrieben. Es besteht im wesentlichen aus 50-75% Ethoxydiglycol als Lösungsmittel, 10-23% Grünem Kaffee-Extrakt und 5-10% Sophora Japonica-Blüten-Extrakt. Eine damit zubereitete Geruchsbindemittel-Lösung ist daher nach ihrem Gebrauch biologisch, also umweltschonend abbaubar. Diesem Konzentrat kann auch ein Bakteriostatikum beigemischt sein.

Für ein druckloses Zuführen von einsatzfertiger Geruchsbindemittel-Lösung - aber auch Geruchsbindemittel-Konzentrat - aus dem Vorratsbehälter 43 in den Reinigungsbehälter 18 ist von einer Abflussöffnung im Boden des Vorratsbehälters 43 eine Fallleitung 47 (Fig. 2, 4) bis in den Reinigungsbehälter 18 geführt, wo sie oberhalb der Lochplatte 30 der Nass-Filtervorrichtung 26 in einem Schwimmerventil 48 endet. Ein unterhalb der Abflussöffnung des Vorratsbehälters 43 in die Fallleitung 47 eingesetztes Absperrorgan 49 kann über ein Gestänge 50 (Fig. 2) mittels des schon erwähnten Hebels 13 auf der Gerätegehäuse-Stirnseite 4 stufenlos zwischen einer "Offen"- und einer "Geschlossen"-Stellung verstellt werden, wofür auf der Stirnseite des Gerätegehäuses z. B. eine entsprechende - nicht gezeigte - Skala mit z. B. einer 90°-Einteilung vorgesehen sein kann.

Zum erstmaligen Reinigen von geruchs- und schadstoffbelasteter Luft oder nach einer Betriebspause des Luftreinigungsgeräts bzw. nach dessen Transport zu einem neuen Einsatzort, muss dieses zunächst betriebsbereit gemacht werden. Welche Maßnahmen hierzu durchzuführen sind, hängt davon ab, ob das Luftreinigungsgerät stationär, also fest eingebaut, oder mobil, z. B. auch an wechselnden Einsatzorten, betrieben wird.

Bei einem mobil eingesetzten Luftreinigungsgerät wird hierzu außer dem elektrischen Anschluss ggf. z. B. zunächst ein Schlauch für das evtl. notwenige Abpumpen von wirkungsmäßig verbrauchter Geruchsbindemittel-Lösung 19 aus dem Reinigungsbehälter 18, z. B. in ein Waschbecken oder einen sonstigen Abfluss, mit dem dafür vorgesehenen Schlauchanschlussstutzen 39 verbunden. Bei stationärem Geräte-Betrieb wird es sich hierbei um einen Festanschluss handeln.

Für einen zyklisch-automatischen Betrieb des Luftreinigungsgeräts ist im Schaltkasten 10 eine entsprechende Gerätesteuerung vorgesehen. Sie wird beim Einschalten des Geräte-Ein/Aus-Netzschalters 7 aktiviert und bewirkt Folgendes:

Ist aufgrund von Flüssigkeit im Reinigungsbehälter 18, das ist normalerweise benutzte, nicht oder nicht vollständig abgepumpte Geruchsbindemittel-Lösung 19, nach dem letzten Luftreinigungszyklus, das Schwimmerventil 48 geschlossen, dann wird, aber auch unabhängig davon, sozusagen sicherheitshalber, von der Gerätesteuerung die Entleerungspumpe 36 eingeschaltet, um ggf. noch vorhandene Reste an unwirksam gewordener Geruchsbindemittel-Lösung 19 über den an den Schlauch-Anschlussstutzen 39 angeschlossenen Entleerungsschlauch abzupumpen, bis der Reinigungsbehälter 18 leer und das Schwimmerventil 48 geöffnet hat. Daraufhin fließt über die Fallleitung 47 aus dem Vorratsbehälter 43 eine neue Charge Geruchsbindemittel-Lösung in den Reinigungsbehälter 18, bis bei einem sechs Litern entsprechenden Füllstand das Schwimmerventil 48 wieder schließt.

Eine solche Menge Geruchsbindemittel-Lösung 19 hat sich für ein Luftreinigungsgerät der gezeigten Größenordnung und den damit verfolgten Zweck im Hinblick auf die diesbezüglich wegen der grundsätzlichen Gefahr einer Verkeimung einer solchen Luft-Reinigungslösung zu beachtenden hygienischen Aspekte bzw. gesundheitsbehördlichen Bestimmungen und Vorschriften als völlig ausreichend erwiesen. Diesen Bestimmungen zufolge ist es zulässig, mit einer solchen Menge ununterbrochen sechs Stunden lang geruchs- und schadstoffbelastete Luft zu reinigen, bevor sie erneuert werden muss, da z. B. pro Liter "ODOCID"-Geruchsbindemittel-Lösung eine Stunde Luftreinigungsbetrieb zugelassen ist. Somit können mit einem dreißig Liter betragenden. Vorrat an Geruchsbindemittel-Lösung im Vorratsbehälter 43 fünf Reinigungszyklen mit je sechs Stunden Dauer ausgeführt werden, das Luftreinigungsgerät also ohne Unterbrechung 30 Stunden lang betrieben werden, bevor der Vorrat an Gebruchsbindemittel-Lösung im Vorratsbehäter 43 erneuert werden muss.

Nun wird ein Zeitrelais aktiviert, das die Umwälzpumpe 32 einschaltet, um Geruchsbindemittel-Lösung 19 aus dem Reinigungsbehälter 18 zu dem Lösungs-Verteilerbalken 27 zu fördern, aus dem sie in die Strickschläuche 29 fließt. Sie rinnt in ihnen und, durch deren grobporige Wandung hindurchtretend, auch außen an ihnen, auf ihnen einen Film aus der Lösung 19 bildend, unter Schwerkrafteinfluß wieder zurück in den Vorrat an Geruchsbindemittel-Lösung 19 im Reinigungsbehälter 18, aus dem sie erneut im Kreislauf von der Umwälzpumpe 32 zum Lösungs-Verteilerbalken 27 gefördert wird.

Mit dem Einschalten der Umwälzpumpe 32 wird auch der Radialventilator 25 eingeschaltet und dadurch geruchs- und schadstoffbelastete Luft durch die Lauftansaugöffnung 6 in das Gerätegehäuse gesogen und durch das Gerätegehäuse bis in den Reinigungsbehälter 18 gefördert und gegen die den Weg der geförderten Luft vorhangartig kreuzenden Reihen von Strickschläuchen 29 geblasen. Auf diese Weise gelangt die von Gerüchen und Schadstoffen zu reinigende Luft in einen intensiven Kontakt mit der kontinuierlich hierfür außen an den Strickschläuchen 28 herunterrinnenden Geruchsbindemittel-Lösung.

In dem in den Figuren dargestellten Geräte-Ausführungsbeispiel wird eine zubereitete, etwa sechs Liter betragende Geruchsbindemittel-Lösung 19 chargenmäßig, entsprechend der zuvor erwähnten Verkeimungs-Bestimmungen, jeweils maximal sechs Stunden lang kontinuierlich umgewälzt. Dadurch werden in dieser so bewegten Geruchsbindemittel-Lösung 19 die von ihr aus der gereinigten Luft aufgenommenen Schadstoffpartikel, statt einen Schlamm zu bilden, in Schwebe gehalten und aufgrund der grobporigen, sich damit nicht zusetzenden Strickschläuche 28 ständig auch in ihr mitgeführt, bis sie beim Entleeren des Reinigungsbehälters 18 durch Abpumpen der wirkungsmäßig verbrauchten Geruchsbindemittel-Lösung 19 mit aus dem Umwälz-Kreislauf dieser Lösung 19 ausgeschwemmt werden.

Um eine unbehinderte kontinuierliche Umwälzung der Geruchsbindemittel-Lösung 19 auch bei einer aufgrund stark verschmutzter Luft evtl. doch am Boden des Reinigungsbehälters 18 einsetzenden Schlammbildung zu gewährleisten, kann der Ansaugstutzen der Umwälzpumpe 32, z. B. im oberen Drittel oder auf halber Höhe im Reinigungsbehälter 18, d. h. im schlammfreien Bereich, angeordnet werden.

Außerdem kann, um ein Schlamm-Ausschwemmen aus dem Reinigungsbehälter 18 auch konstruktiv zu unterstützen, der Boden des Reinigungsbehälters 18 z. B. konisch nach Art eines Trichters ausgebildet sein, wobei dann der Trichterabzug mit dem Saugstutzen der Entleerungspumpe 36 zu verbinden wäre.

Für Luftreinigungsgeräte mit größerer Reinigungsleistung könnte gemäß der bereits erwähnten behördlichen Bestimmungen ein Reinigungsbehälter 18 auch für bis zu 12 Liter Geruchsbindemittel-Lösung 19 vorgesehen werden, so dass dann zulässigerweise maximal sogar zwölf Stunden lang ununterbrochen geruchs- und schadstoffbelastete Luft gereinigt werden könnte.

Nach dem hier aufgrund der jeweils etwas mehr als sechs Liter betragenden Geruchsbindemittel-Lösung 19 zulässigen ununterbrochen sechsstündigen Betrieb des Luftreinigungsgeräts wird von einem zweiten Zeitrelais im Schaltkasten 10 die Umwälzpumpe 32 ab- und die Entleerungspumpe 36 eingeschaltet, um aus dem Reinigungsbehälter 18 die wirkungsmäßig verbrauchte Geruchsbindemittel-Lösung 19 über die Entleerungs-Steigleitung 37 und den z. B. endseitig am Anschlussstutzen 39 daran angeschlossenen Entleerungsschlauch abzupumpen. Ist der Reinigungsbehälter 18 leer und hat somit das Schwimmerventil 48 geöffnet, beginnt der Betriebs-Zyklus des Luftreinigungsgeräts von vorn: Befüllen des Reinigungsbehälters 18 aus dem Vorratsbehälter 43 mit sechs Liter Geruchsbindemittel-Lösung 19 und deren anschließendes Fördern aus dem Reinigungsbehälter 18 zum Lösungs-Verteilerbalken 27, aus dem sie in die Strickschläuche 29 abfließt und in den Reinigungsbehälter 18 zurückrinnt.

Statt die Geruchsbindemittel-Lösung 19, wie vorgesehen, ohne Unterbrechung sechs Stunden lang umzuwälzen, ist es auch denkbar, ihren Verbrauchsgrad zu messen, z. B. durch entsprechende Sensoren. Diese können z. B. den Verschmutzungsgrad der Geruchsbindemittel-Lösung 19 über deren Trübung erfassen, die sich aus der aus der zu reinigenden, unterschiedlich verschmutzten und geruchsbelasteten Luft ausgewaschenen Schmutzpartikeldichte ergibt, um so die Dauer des Förderns von Geruchsbindemittel-Lösung 19 im Kreislauf von ihrem zunehmenden Verschmutzungsgrad abhängig zu machen.

Um auf einfache Weise den Konzentrationsgrad der Geruchsbindemittel-Lösung 19 an den Grad der Geruchsverschmutzung der zu reinigenden Luft anpassen zu können, kann z. B. eine entsprechende Konzentrat-Einstell-Möglichkeit auf der Gerätegehäuse-Stirnseite 4 vorgesehen werden, z. B. mit Hilfe eines mit einer entsprechenden Konzentrat-Prozentangabe-Skala oder auch Geruchskategorie-Angaben versehenen Stellknopfes.

Stattdessen oder auch in Kombination damit, könnte auch eine Einstellmöglichkeit für die Dauer eines Reinigungszyklus, also die Laufzeitdauer der Umwälzpumpe 32, vorgesehen werden.

Mit dem Luftreinigungsgerät in der zuvor beschriebenen Ausführung und der beschriebenen zyklisch-automatischen Betriebsweise kann z. B. ein mit Zigarettenrauch belasteter Raum mit einem Volumen von 250 m³, z. B. ein Gaststättenraum, so gereinigt werden, dass in Abhängigkeit vom Ausmaß der Rauchbelastung eine spürbare Geruchsminderung schon nach ca. zehn Minuten bis einer Stunde eintritt.

Wird eine höhere Luft-Reinigungskapazität benötigt, als mit nur einem Luftreinigungsgerät in der zuvor beschriebenen Ausführungsform erzielt werden kann, können, statt dessen Leistung zu vergrößern, wodurch es ggf. nicht mehr ohne weiteres handhabbar und transportabel wäre, auch mehrere Luftreinigungsgeräte in der zuvor erläuterten Ausführungsform, ggf. auch eine ganze Batterie davon, gleichzeitig eingesetzt werden.

Durch die in dem Luftreinigungsgerät vorzugsweise zur Anwendung kommenden Strickschlauch-Filterelemente 29 wird die Luft beim Reinigen mit der Geruchsbindemittel-Lösung 19 unvermeidlich auch geringfügig mit dieser Lösung 19 befeuchtet, was zu einer Kühlung der gereinigten Raumluft durch eine Absenkung ihrer Ausgangstemperatur um ca. 4° C führen kann - ein Effekt, der im Sommer z. B. sogar sehr erwünscht sein kann.

Soll diese Abkühlung vermieden werden, kann z. B. im Bereich der Luftausblasöffnung 17 auf der Geräterückseite eine Luft-Heizvorrichtung vorgesehen werden.

Im übrigen stellt sich aufgrund der mit Geruchsbindemittel-Lösung 19 angefeuchteten gereinigten Luft ein positiver Nebeneffekt dahingehend ein, dass nach Abschalten des Reinigungsgeräts ggf. noch verbliebene oder durch neu zuströmende Gerüche oder durch Ausdünstungen wieder entstehende Geruchsbelastungen von dieser Befeuchtung, z. B. nachts, absorbiert werden und so, z. B. in Gaststätten oder Restaurants, zu einer sich am nächsten Tag angenehm bemerkbar machenden Nachreinigung führen, obwohl das Reinigungsgerät selbst abgeschaltet war.

Um eine für eine zügige Reinigung von belasteter Raumluft vorteilhafte Luftzirkulation zu erzielen, kann es sich als zweckmäßig erweisen, an die Luft-Ausblasöffnung 17 an der Rückseite des Gerätegehäuses ein vertikal ausgerichtetes Luftabzugsrohr vorzusehen.

Um ein für mobile Einsatzzwecke vorgesehenes Luftreinigungsgerät für einen Transport vorzubereiten, kann nach dem Schließen des Absperrorgans 49 mittels des Hebels 13 sicherheitshalber mit dem auf der Stirnseite des Gerätegehäuses vorgesehenen Schalter 9 die Entleerungspumpe 36 solange manuell eingeschaltet werden, bis das Schwimmerventil 48 öffnet und sie daraufhin von der Gerätesteuerung im Schaltkasten 10 abgestellt wird.

Für den zyklisch-automatischen Betrieb des Luftreinigungsgeräts kann auch eine Zeitschaltuhr vorgesehen werden. Dann kann es, um die zuvor erwähnte Nachreinigungswirkung der mit Geruchsbindemittel-Lösung 19 befeuchteten gereinigten Luft gezielt zu nutzen, z. B. intervallartig immer nur stundenweise, vorzugsweise bei Nacht, wie z. B. in einer Gaststätte, betrieben werden, ohne dass hierzu jemand anwesend sein müsste.

Nicht unerwähnt bleiben soll, dass auch Riechöle eingesetzt werden können, z. B. durch Zugabe zu der im Vorratsbehälter 43 enthaltenen Geruchsbindemittel-Lösung oder dem Geruchsbindemittel-Konzentrat, um die gereinigte Luft vor dem Ausblasen aus dem Gerätegehäuse zu parfümieren oder zu aromatisieren.

Für den stationären Betrieb des Luftreinigungsgeräts befindet sich im Vorratsbehälter 43 statt fertiger GeruchsbindemittelLösung vorzugsweise ein das zu deren Zubereitung mittels Frischwasser dienendes Geruchsbindemittel-Konzentrat, wie z. B. das schon erwähnte "ODOCID". Der dafür vorgesehen Frischwasser-Anschlussstutzen 40 wird dann z. B. mit einem Schlauch mit einem an einer Leitung des öffentlichen Trinkwassernetzes angeschlossenen Wasserhahn verbunden. Nach dem Abpumpen einer Geruchsbindemittel-Lösungs-Charge 19 aus dem Reinigungsbehälter 18 ist aufgrund des dann geöffneten Schwimmerventils 42 die Frischwasserzuleitung offen, so dass Frischwasser in den Reinigungsbehälter 18 fließt. Da gleichzeitig auch das Schwimmerventil 48 der Fallleitung 47 geöffnet ist, fließt auch Geruchsbindemittel-Konzentrat aus dem Vorratsbehälter 43 in den Reinigungsbehälter 18 und vermischt sich hier mit dem Frischwasser. Damit die so entstehende Geruchsbindemittel-Lösung 19 die gewünschte Konzentration aufweist, kann das mit dem Hebel 13 auf der Stirnseite 4 des Luftreinigungsgeräts betätigbare Absperrorgan 49 in der Fallleitung 47 entsprechend eingestellt werden, z. B. mit Hilfe der schon erwähnten Skala. Dadurch fließt nur die für die gewünschte Konzentration der in den Reinigungsbehälter 18 somit automatisch gesteuert eingefüllten sechs Liter Frischwasser notwendige Menge an Geruchsbindemittel-Konzentrat aus dem Vorratsbehälter 43 in den Reinigungsbehälter 18.

Hat das Frischwasser die zugeordnete Füllstandsmarke von sechs Litern im Reinigungsbehälter 18 erreicht, schließt sowohl der Frischwasser-Zuleitungsschwimmer 42 als auch der Fallleitungsschwimmer 48.

Um hierbei ein Überfüllen zu verhindern, ist ein weiterer, mit der Gerätesteuerung verbundener Füllstandsfühler 51 im Reinigungsbehälter 43 vorgesehen.

Nach Beendigung des daraufhin beginnenden Luftreinigungszyklus', also sechs Stunden danach, wird die Umwälzpumpe 32 von der Gerätesteuerung im Schaltkasten 10 ausgeschaltet, die verbliebene Geruchsbindemittel-Lösung 19 mit der Entleerungspumpe 36 abgepumpt und der nächste Zyklus mit Befüllen des Reinigungsbehälters 18 mit Frischwasser und Geruchsbindemittel-Konzentrat aus dem Vorratsbehälter 43 begonnen. Dies kann im stationären Betrieb des Luftreinigungsgeräts sooft hintereinander stattfinden, bis der z. B. dreißig Liter große Vorrat an Geruchsbindemittel-Konzentrat verbraucht ist und erneuert werden muss.

Bei einem Vorrat von dreißig Litern des zuvor erwähnten Geruchsbindemittel-Konzentrats "ODOCID" im Vorratsbehälter 43 kann mit dem gezeigten Luftreinigungsgerät, mit Unterbrechungen, da chargenweise immer wieder wirkungsmäßig verbrauchte Geruchsbindemittel-Lösung 19 abgepumpt werden muss, um sie zu erneuern, ca. hundertfünfzig mal sechs Stunden, also insgesamt ca. 900 Stunden lang, geruchs- und schadstoffbelastete Luft mit der z. B. aus jeweils 200 ml "ODOCID"-Geruchsbindemittel-Konzentrat und sechs Litern Frischwasser gebildeten 2%-igen Geruchsbindemittel-Lösung 19 gereinigt werden, bevor der Konzentratvorrat im Vorratsbehälter 43 wieder aufgefüllt werden muss.

Bei anderen Luftverschmutzungsgraden brauchen evtl, nur 100 ml Konzentrat auf sechs Liter Frischwasser, ggf. müssen aber auch z. B. 500 ml Konzentrat zudosiert werden. Gleichzeitig kann sich auch die jeweils dafür erforderliche Dauer der Reinigungszyklen des Luftreinigungsgeräts verändern.

Mit dem mit einer unkomplizierten, ausschließlich auf einer Nassfilter-Technologie beruhenden Bauweise mit wenigen zusammenwirkenden Teilen, kann eine höchst wirksame Reinigung von mit gesundheitsschädigenden Partikeln bis hinunter in den für die Atemwege, insbesondere den Bronchialverästelungen, relevanten 0,5 µ-Bereich, sowie mit allen Arten von störenden Gerüchen belasteter Raumluft außergewöhnlich zuverlässig erfolgen, wobei auch, z. B. im Wellness-Bereich, eine Parfümierung oder Aromatisierung der gereinigten Luft als Nebeneffekt ohne zusätzlichen Geräteaufwand erzielt werden kann.

Das zuvor beschriebene Luftreinigungsgerät eignet sich daher auch ganz besonders für den medizinischen Bereich, und zwar zur Behandlung von Gesundheitsstörungen, wie z. B. Schleimhautreizungen am Auge und den oberen und unteren Luftwegen oder Atemwegserkrankungen, wie der chronischen Bronchitis und dem allergischen Astma, indem die Raumluftqualität diesbezüglich signifikant verbessert wird.

### Bezugszeichenliste

- 1: Rahmenprofilabschnitt
- 2: Kunststoffkappen
- 3: Rollen
- 4: Gerätegehäuse-Stirnwand
- 5: Lamellengitter
- 6: Luftansaugöffnung
- 7: Geräte-Ein/Aus-Netzschalter
- 8: Betriebanzeige-Leuchte
- 9: Schalter
- 10: Schaltkasten
- 11: Kabelauslässe
- 12: Kabeldurchführung
- 13: Hebel
- 14: Rahmenprofilabschnitt
- 15: Gerätegehäuse-Rückwand
- 16: Lamellengitter
- 17: Luftausblasöffnung
- 18: Reinigungsbehälter
- 19: Geruchsbindemittel-Lösung
- 20: Stirnseite von 18
- 21: Lufteintrittsöffnung
- 22: Rückseite von 18
- 23: Luftaustrittsöffnung
- 24: Rahmen
- 25: Radialventilator
- 26: Nass-Filtervorrichtung
- 27: Lösungs-Verteilerbalken
- 28: Oberseite von 18
- 29: Filterelemente (Strickschläuche)
- 30: Lochplatte
- 31: Luftverwirbelungselement (Platte)
- 32: Umwälzpumpe
- 33: Zuflussleitung
- 34: Lösungs-Steigleitung
- 35: Zuflussleitung
- 36: Entleerungspumpe
- 37: Entleerungs-Steigleitung
- 38: rechte Gerätegehäusewand
- 39: Anschlussstutzen
- 40: Anschlussstutzen
- 41: Frischwasserzuleitung
- 42: Schwimmerventil
- 43: Vorratsbehälter
- 44: Oberseite des Gerätegehäuses
- 45: Kappe
- 46: Einfüllöffnung
- 47: Fallleitung
- 48: Schwimmerventil
- 49: Absperrorgan
- 50: Gestänge
- 51: Füllstandsfühler

## Patentansprüche

1. Luftreinigungsgerät mit einem Gerätegehäuse mit wenigstens
- einer Luftansaug- (6) und einer Luftausblasöffnung (17),
- einer Vorrichtung zur Erzeugung eines Luftstroms von der Luftansaugöffnung zur Luftausblasöffnung und
- einem Vorratsbehälter (43) für einen Flüssigkeitsvorrat, **dadurch gekennzeichnet,**
- **dass** es sich bei dem Flüssigkeitsvorrat um eine wässrige Lösung oder ein Konzentrat eines Geruchsbindemittels mit bei Gebrauch sich verbrauchender Wirksamkeit handelt,
- **dass** der Vorratsbehälter (43) im oberen Teil des Gerätegehäuses angeordnet ist und
- **dass** mindestens noch folgendes vorgesehen ist:
- im unteren Bereich des Gerätegehäuses, vor der Luftausblasöffnung (17), ein mit dem Vorratsbehälter (43) in Verbindung stehender, gegenüber dem Inneren des Gerätegehäuses bis auf eine Luftaustrittsöffnung (23) in seiner Rückseite (22) geschlossener so genannter Reinigungsbehälter (18),
- außen auf der der Luftansaugöffnung (6) des Gerätegehäuses zugewandten Stirnseite (20) des Reinigungsbehälters (18) die für eine radiale Luftstromerzeugung ausgebildete Vorrichtung (25),
- vor der Rückseite (22) des Reinigungsbehälters (18) eine den Weg der durch den Reinigungsbehälter von seiner Lufteintritts- (21) zu seiner Luftaustrittsöffnung (23) geförderten Luft kreuzend angeordnete Nass-Filtervorrichtung (26) mit einer Vielzahl von Filterelementen (29) aus einem für die Geruchsbindemittel-Lösung (19) durchlässigen Material in einer zumindest annähernd hohlzylindrischen Ausgestaltung mit in Bezug zur Länge der Filterelemente (29) geringer lichter weite, die in zumindest annähernd vertikaler Ausrichtung, in Abständen nebeneinander aufgereiht, in mehreren parallelen, lückenüberdeckend hintereinander angeordneten Reihen vorhangartig die Querschnittsfläche des Wegs der durch den Reinigungsbehälter (18) geförderten Luft überdecken,
- ein die Anordnung der Filterelemente (29) vertikal in zwei Teile gliederndes Luftverwirbelungselement (31) und
- eine Vorrichtung (32) zum kontinuierlichen Fördern von Geruchsbindemittel-Lösung (19) während deren Wirksamkeitsdauer aus dem Reinigungsbehälter (18) auf ein Niveau im Reinigungsbehälter (18), von dem aus sie die Filterelemente (29) wieder herabläuft.

2. Luftreinigungsgerät nach Anspruch 1, **dadurch gekennzeichnet, dass** es sich bei den Filterelementen (29) um poröse Kunststoff-Hohlprofile handelt.

3. Luftreinigungsgerät nach Anspruch 2, **dadurch gekennzeichnet, dass** die Kunststoff-Hohlprofile von Abschnitten eines aus thermoplastischen Kunststofffäden gestrickten biegeschlaffen, durch Erhitzen stabilisierten Strickschlauchs (29) gebildet sind.

4. Luftreinigungsgerät nach Anspruch 3, **dadurch gekennzeichnet, dass** die Nass-Filtervorrichtung (26) einen sich im Reinigungsbehälter (18) horizontal, unmittelbar unterhalb der Oberseite (28) des Reinigungsbehälters (18), an diese angrenzend angeordnet, sich über die gesamte Breite des Reinigungsbehälters (18) erstreckenden hohlprofilförmigen so genannten Lösungs-Verteilerbalken (27) für die zugeführte Geruchsbindemittel-Lösung (19) aufweist, dessen Boden mit einer Vielzahl von in mehreren parallel hintereinander liegenden, jeweils auf Lücke gesetzten Reihen angeordneten Löchern versehen ist, in denen das obere Ende der einzelnen Strickschläuche (29) angeordnet ist, die sich bis unter den sich im Reinigungsbehälter (18) ausbildenden Luftweg erstrecken, wo ihr unteres Ende in einer Lochplatte (30) angeordnet ist.

5. Luftreinigungsgerät nach einem der vorhergehenden Ansprüche, **dadurch gekennzeichnet, dass** das Luftverwirbelungselement die Form einer rechteckigen, an die Höhe und Tiefe der Nass-Filtervorrichtung (26) angepassten Platte (31) aufweist.

6. Luftreinigungsgerät nach einem der vorhergehenden Ansprüche, **dadurch gekennzeichnet, dass** es sich bei der Vorrichtung zum Erzeugen eines Luftstroms um einen Radialventilator (25) handelt.

7. Luftreinigungsgerät nach einem der vorhergehenden Ansprüche, **dadurch gekennzeichnet, dass** als Vorrichtung zum Fördern von Geruchsbindemittel-Lösung (19) eine mit dem Reinigungsbehälter (18) in Verbindung stehende, kontaktlos ausgebildete Umwälzpumpe (32) vorgesehen ist, deren Druckstutzen mit einer Lösungs-Steigleitung (34) verbunden ist, die in den Lösungs-Verteilerbalken (27) mündet.

8. Luftreinigungsgerät nach einem der vorhergehenden Ansprüche, **dadurch gekennzeichnet, dass** eine mit dem Reinigungsbehälter (18) in Verbindung stehende, kontaktlos ausgebildete Entleerungspumpe (36) vorgesehen ist, deren Druckstutzen verbunden ist mit einer Entleerungs-Steigleitung (37), die in einem durch eine Seitenwand (38) des Gerätegehäuses nach außen führenden, mit einem Rückschlagventil ausgestatteten Anschlussstutzen (39) endet.

9. Luftreinigungsgerät nach einem der vorhergehenden Ansprüche, **dadurch gekennzeichnet, dass** vom Vorratsbehälter (43) eine im Reinigungsbehälter (18) über dem vorgesehenen Geruchbindemittel-Lösungs-Füllstand in einem Schwimmerventil (48) endende Fallleitung (47) ausgeht, welches in Abhängigkeit eines vorgegebenen Füllstandes im Reinigungsbehälter (18) öffnet oder schließt.

10. Luftreinigungsgerät nach einem der vorhergehenden Ansprüche, **dadurch gekennzeichnet, dass** im Reinigungsbehälter (18) ein Flüssigkeits-Füllstände im Reinigungsbehälter (18) erfassender Füllstandsfühler (51) vorgesehen ist.

11. Luftreinigungsgerät nach einem der vorhergehenden Ansprüche, **dadurch gekennzeichnet, dass** in einer der Seitenwände (38) des Gerätegehäuses ein Anschlussstutzen (40) zum Anschluss einer Frischwasser-Zuführungsleitung vorgesehen ist, von dem eine ebenfalls im Reinigungsbehälter (18) in einem Schwimmerventil (42) endende Leitung (41) ausgeht, welches in Abhängigkeit eines vorgegebenen Frischwasser-Füllstandes im Reinigungsbehälter (18) öffnet oder schließt.

12. Luftreinigungsgerät nach einem der vorhergehenden Ansprüche, **dadurch gekennzeichnet, dass** eine den Betrieb des Luftreinigungsgeräts zyklisch-automatisch steuernde Gerätesteuerung vorgesehen ist, die mittels Zeitrelais zumindest unter Berücksichtigung der Wirksamkeitsdauer der Geruchsbindemittel-Lösung (19), der von Schwimmerventil (48) und ggf. (42) und Füllstandsfühler (51) gemäß ihren Stellung übermittelten Signalen die Entleerungspumpe (36), die Umwälzpumpe (32) und die Vorrichtung zum Fördern von Luft (25) ansteuert sowie vorgesehene optische und/oder akustische Alarmsignale ein- und ausschaltet.

## Claims

1. Air purification device having a device housing with at least
- an air intake (6) and an air blow out (17),
- a device for generating a stream of air from the air intake to the air blow out, and
- a storage container (43) for a reservoir of liquid, **characterised in that**
- the liquid reservoir is an aqueous solution or an aroma- or odour-binding concentrate which exhibits diminishing effectiveness in use,
- the storage container (43) is positioned in the upper section of the housing of the device, and
- at least the following are provided:
- a so-called purification vessel (18) that is closed off at its rear (22) from the interior of the device housing up to an air blow-out opening (23) and is connected with the storage container (43) in the lower region of the device housing, in front of the air blow out opening (17),
- a device (25) that is designed for generating a radial current of air at the front end (20) of the purification vessel (18), which is turned towards the air intake opening (6) outside,
- a wet filtering apparatus (26) with a multiplicity of filter elements (29) in front of the back side (22) of the purification vessel (18), which intersects the path of the air stream through the purification vessel from its air intake (21) to its air blow-out opening (23), said filter elements (29) consisting of a material that is permeable to the aroma/odourbinding solution (19) and being of a hollow cylindrical configuration of lesser clearance in relation to the length of the filter elements (29), which cover the cross-sectional area of the path of the air stream through the purification vessel (18) in the manner of curtains that are lined up to adjoin each other, at least in a substantially vertical direction, and that are arranged in a succession of parallel rows so as to cover cross-sectional gaps,
- an air turbulence member (31) that vertically divides the arrangement of filter elements (29) into two parts, and
- an apparatus (32) for the continuous conveyance of aroma/odourbinding solution (19) during the period of its effectiveness, from the purification vessel (18) to a level in the purification vessel (18), where it runs down from the filter elements (29) once again.

2. Air purification device according to claim 1, **characterised in that** the filter elements (29) comprise porous, hollow plastic profiles.

3. Air purification device according to claim 2, **characterised in that** the hollow, plastic profiles are formed from slack lengths of hose by knitting together thermoplastic filaments (29) which are then stabilised by heating.

4. Air purification device according to claim 3, **characterised in that** the wet filtering apparatus (26) exhibits a so-called solution distribution rack (27) for the aroma/odour-binding solution 19), which is of hollow sectional structure and stretches along the entire width of the purification vessel (18) and is positioned within and immediately below the upper side (28) of the purification vessel (18) so as to adjoin it, the bottom of which is provided with a multiplicity of holes that are arranged in several successions of parallel rows, with holes provided in each case to coincide with a gap for the upper ends of the individual hoses (29), which stretch below the air channel passing below the purification vessel (18), where their lower end is located in a perforated plate (30).

5. Air purification device according to any one of the preceding claims, **characterised in that** the air turbulence member exhibits the shape of a rectangular plate whose height and depth are adapted to the wet filtering apparatus (31).

6. Air purification device according to any one of the preceding claims, **characterised in that** the device for generating a current of air is a radial fan (25).

7. Air purification device according to any one of the preceding claims, **characterised in that** a non-contacting circulation pump (32) which is connected to the purification vessel (18) is provided for the conveyance of the aroma/odour-binding solution (19), the pressure socket of which is connected with a riser for the solution (34), and which leads into the solution distributor rack (27).

8. Air purification device according to any one of the preceding claims, **characterised in that** a non-contacting draining pump (36) is provided which is connected with the purification vessel (18) and the pressure socket of which is connected with a draining riser (37) that ends with a connecting piece (39) which is fitted with a non-return valve and which passes outwards through a side wall (38) of the device housing.

9. Air purification device according to any one of the preceding claims, **characterised in that** a down-pipe (47) protrudes from the storage container (43) in the purification vessel (18) via a flotation valve (48) for the envisaged aroma/odour-solution fill level, this valve opening and closing as a function of the liquid level in the purification vessel (18).

10. Air purification device according to any one of the preceding claims, **characterised in that** in the purification vessel (18) a level sensor (51) is provided for determining the fill level of liquid in the purification vessel (18).

11. Air purification device according to any one of the preceding claims, **characterised in that** a connecting piece (40) is provided in one of the side walls (38) of the device housing for connection with a fresh water feeder pipe, from which a pipe (41) likewise proceeds in the purification vessel (18) and ends with a flotation valve (42) which opens or closes in dependence on a predetermined fill level of fresh water being reached in the purification vessel (18).

12. Air purification device according to any one of the preceding claims, **characterised in that** a device controller is provided for the cyclical automatic control of air purification device operation, which uses a time-lag relay at least with regard to the duration of effectiveness of the aroma/odour-binding solution (19) in accordance with the position of the flotation valve (48), as is necessary (42), and the fill level sensor (51) and employs the transmitted signals to actuate the draining pump (36), the circulation pump (32) and the device for conveying air (25), as well as to switch on and off the envisaged optical and/or acoustic alarm signals.

## Revendications

1. Appareil purificateur de l'air comportant un carter d'appareil comportant au moins
- un orifice d'aspiration (6) et un orifice d'évacuation (7) de l'air,
- un dispositif pour la production d'un flux d'air de l'orifice d'aspiration de l'air vers l'orifice d'évacuation de l'air et
- un réservoir de stockage (43) pour une réserve de liquide,
**caractérisé en ce que**
- la réserve de liquide est une solution aqueuse ou un concentré d'un agent de liaison des odeurs dont l'efficacité s'épuise à l'utilisation,
- le réservoir de stockage (43) est disposé dans la partie supérieure du carter de l'appareil et
- est prévu au moins ce qui suit :
- dans la zone inférieure du carter de l'appareil, avant l'orifice d'évacuation de l'air (17), un réservoir appelé réservoir de purification (18) communiquant avec le réservoir de stockage (43), fermé sur son côté arrière (22) par rapport à l'intérieur du carter de l'appareil jusqu'à un orifice de sortie de l'air (23),
- à l'extérieur, sur le côté avant (20) du réservoir de purification (18) tourné vers l'orifice d'aspiration de l'air (6) du carter de l'appareil, le dispositif (25) conçu pour la production d'un flux d'air radial,
- avant le côté arrière (22) du réservoir de purification (18) un dispositif de filtration humide (26) disposé de manière à croiser la trajectoire de l'air traversant le réservoir de purification de son orifice d'entrée d'air (21) à son orifice de sortie d'air (23), comportant une pluralité d'éléments de filtration (29) constitués d'un matériau perméable à la solution d'agent de liaison des odeurs (19) d'une configuration au moins à peu près en cylindre creux présentant par rapport à la longueur des éléments de filtration (29) une moindre largeur intérieure et qui, orientés au moins à peu près à la verticale, rangés à distance les uns à côtés des autres en plusieurs rangées parallèles disposées les unes derrière les autres de manière à recouvrir les interstices, recouvrent à la manière d'un rideau la surface transversale de la trajectoire de l'air traversant le réservoir de purification (18).
- un élément de mise en turbulence de l'air (31) divisant verticalement l'ensemble d'éléments de filtration (29) en deux parties et
- un dispositif (32) pour l'amenée en continu de la solution d'agent de liaison des odeurs (19) pendant sa durée d'efficacité hors du réservoir de purification (18) pour qu'elle atteigne dans le réservoir de purification (18) un niveau à partir duquel elle coule à nouveau le long des éléments de filtration (29).

2. Appareil purificateur de l'air selon la revendication . 1, **caractérisé en ce que** les éléments de filtration (29) sont des profilés creux poreux en matière plastique.

3. Appareil purificateur de l'air selon la revendication 2, **caractérisé en ce que** les profilés creux en matière plastique sont formés de tronçons d'un tube flexible en tricot constitué (29) de fibres thermoplastiques formant un tricot lâche et stabilisé par chauffage.

4. Appareil purificateur de l'air selon la revendication 3, **caractérisé en ce que** le dispositif de filtration humide (26) présente ce que l'on appelle une barre de distribution de la solution (27) pour la solution d'agent de liaison des odeurs (19) amenée, en forme de profilé creux, disposée dans le réservoir de purification (19) à l'horizontale juste au-dessous de la face supérieure (28) du réservoir de purification (18) et adjacente à cette dernière, et s'étendant sur toute la largeur du réservoir de purification (18), et dont le fond est muni d'une pluralité de perforations disposées en plusieurs rangées placées parallèlement les unes derrière les autres, chacune en chicane, dans lesquelles perforations est disposée l'extrémité supérieure de chacun des flexibles en tricot (29), qui s'étendent jusqu'au-dessous de la trajectoire de l'air se formant dans le réservoir de purification (18), où leur extrémité inférieure est disposée dans une plaque perforée (30).

5. Appareil purificateur de l'air selon l'une des revendications précédentes, **caractérisé en ce que** l'élément de mise en turbulence de l'air présente la forme d'une plaque rectangulaire (31) adaptée à la hauteur et à la profondeur du dispositif de filtration humide (26).

6. Appareil purificateur selon l'une des revendications précédentes, **caractérisé en ce que** le dispositif de production d'un flux d'air est un ventilateur radial (25).

7. Appareil purificateur selon l'une des revendications précédentes, **caractérisé en ce que** comme dispositif d'alimentation en solution d'agent de liaison des odeurs (19) est prévue une pompe de circulation (32) conçue sans contact, communiquant avec le réservoir de purification (18), et dont les tuyaux de refoulement communiquent avec une colonne montante de la solution (34) qui débouche dans la barre de distribution de la solution (27).

8. Appareil purificateur selon l'une des revendications précédentes, **caractérisé en ce qu'**est prévue une pompe de vidange (36) conçue sans contact, communiquant avec le réservoir de purification (18) et dont le tuyau de refoulement est raccordé à une colonne montante de vidange (37) qui aboutit dans un tuyau de raccordement (39) équipé d'un clapet antiretour et conduisant vers l'extérieur en traversant une paroi latérale (38) du carter de l'appareil.

9. Appareil purificateur selon l'une des revendications précédentes, **caractérisé en ce que** du réservoir de stockage (43) part une conduite forcée (47) aboutissant dans le réservoir de purification (18) au-dessus du niveau de remplissage prévu en solution d'agent de liaison des odeurs dans un clapet à flotteur (48) qui s'ouvre ou se ferme en fonction d'un niveau de remplissage donné dans le réservoir de purification (18).

10. Appareil purificateur selon l'une des revendications précédentes, **caractérisé en ce qu'**est prévu dans le réservoir de purification (18) un capteur de niveau de remplissage en liquide (51) détectant un niveau de remplissage du réservoir de purification (18).

11. Appareil purificateur selon l'une des revendications précédentes, **caractérisé en ce qu'**est prévu dans une des parois latérales (38) du carter de l'appareil un tuyau de raccordement (40) pour le raccordement d'une conduite d'alimentation en eau fraîche, d'où part une conduite (41) aboutissant également dans le réservoir de purification (18) dans un clapet à flotteur (42) qui s'ouvre ou se ferme en fonction d'un niveau de remplissage en eau fraîche donné dans le réservoir de purification (18).

12. Appareil purificateur selon l'une des revendications précédentes, **caractérisé en ce qu'**est prévue pour une commande cyclique et automatique du fonctionnement de l'appareil purificateur de l'air une commande de l'appareil qui au moyen de relais temporisés, au moins en tenant compte de la durée d'efficacité de la solution d'agent de liaison des odeurs ((19), des signaux émis par le clapet à flotteur (48) et le cas échéant (42) et le capteur de niveau (51) en fonction de leur position, commande la pompe de vidange (36), la pompe de circulation (32) et le dispositif d'amenée de l'air (25) et met en marche et arrête les signaux d'alarme acoustique et/ou optique prévus.
